# FASCICULE DE BREVET EUROPEEN

(11) **EP 0 388 337 B1**
(45) Date de publication et mention de la délivrance du brevet: **07.07.1993**
(21) Numéro de dépôt: 90430003.5
(22) Date de dépôt: 02.02.1990
(51) Int. Cl.: F01K 15/04, F01K 19/02, F01K 7/02, B63G 8/10

(54) **Machine thermique à vapeur à combustion externe et procédé pour son fonctionnement à l'air atmosphérique ou en chambre close**
Dampfmaschine mit äusserer Verbrennung und Betriebsverfahren dafür mit atmospherischer Luft oder in geschlossenem Raum
Steam machine with external combustion and process for operating same with atmospheric air or in a closed space

(30) Priorité: 13.03.1989 FR 8903436
(43) Date de publication de la demande: 19.09.1990
(73) Titulaire: Bech, Jean André, F-13007 Marseille (FR)
(72) Inventeur: Bech, Jean André, F-13007 Marseille (FR)
(74) Mandataire: Arbousse-Bastide, Jean-Claude Philippe

(56) Documents cités:
- BE-A- 404 049
- FR-A- 540 930
- FR-A- 2 552 160
- GB-A- 595 668
- US-A- 2 132 212
- US-A- 2 662 369
- US-A- 4 156 343
- US-A- 4 240 260

## Description

La présente invention a pour objet une machine thermique à vapeur à combustion externe et un procédé pour son fonctionnement à l'air atmosphérique ou en chambre close.

Le secteur technique de l'invention est celui des machines thermiques et plus particulièrement du type à combustion externe, à circuit fermé de vapeur à haute pression, surchauffe et soutirage.

L'utilisation de la vapeur d'échappement est connue par le brevet US.A.2 132 212, lequel concerne des moyens pour utiliser la vapeur d'échappement d'un moteur à vapeur alternatif et dont l'objectif est de transformer la chaleur disponible contenue dans la vapeur d'échappement en énergie absorbée pendant sa détente dans un moteur alternatif à vapeur à plusieurs cylindres de sections différentes. Selon ce brevet, la vapeur d'échappement est utilisée dans une turbine à vapeur qui entraîne un ou plusieurs compresseurs afin de comprimer la vapeur détendue dans ledit moteur à une plus haute pression et la réintroduire dans ledit moteur alternatif.

Dans le brevet antérieur FR 2 552 160 le demandeur a exposé les caractéristiques d'une machine pour la production d'énergie mécanique d'origine thermique, adaptée aux conditions d'utilisation sous-marines, cette machine étant conçue pour fonctionner exclusivement en enceinte close, encore appelé fonctionnement anaérobie.

Une telle machine comprenant un turbo-générateur intégré dans un turbo-moteur est performante et dans son application aux véhicules sous-marins, elle présente des avantages certains en regard des moteurs à fonctionnement électrique, alimentés par des accumulateurs devant être périodiquement rechargés en surface par une génératrice entraînée par un moteur Diesel.

Son utilisation est malheureusement tributaire de la tenue mécanique des réducteurs de vitesse existants lorsqu'ils sont appliqués à des turbines à très haut régime de rotation.

Un moteur thermique ne produisant que des résidus d'une combustion complète en présence d'oxygène, d'une composition telle que leur élimination est aisée, est connu sous le nom de son concepteur, le pasteur Robert STIRLING. Ce moteur est actuellement exploité par la firme suédoise UNITED STIRLING. Il s'agit en l'espèce d'un moteur thermique à combustion externe alternatif, utilisant comme fluide caloporteur travaillant en circuit fermé, de l'hydrogène ou de l'hélium et plus particulièrement conçu pour fonctionner à l'atmosphère libre.

Son cycle thermodynamique est très voisin du cycle de CARNOT, dont le rendement est le maximum réalisable par une machine thermique utilisant une chute de chaleur donnée. C'est ce qui fait le principal intérêt de ce moteur qui, outre qu'il est à combustion externe, celle-ci peut y être parfaitement contrôlée. Un autre avantage de ce moteur est sa faible pollution atmosphérique. En outre il peut fonctionner avec tout combustible et est particulièrement silencieux.

La construction du moteur STIRLING est apparemment simple, ne comportant aucun organe de distribution. Toutefois, ses composants sont beaucoup plus sophistiqués et complexes qu'il n'y paraît, sont d'une technologie très délicate et de coût élevé.

Du fait qu'il n'est pas conçu pour un fonctionnement anaérobie, son application au sous-marin implique une adaptation particulière.
- Soit comme pour le moteur DIESEL à recyclage, il convient de l'équiper d'une injection d'oxygène régénérant ses gaz d'échappement, recyclés après extraction de l'eau et du CO₂ ;
- Soit il faut réaliser une combustion à l'oxygène pur mais qui exige cependant comme la solution précédente l'extraction de l'eau et du CO₂ produits par la combustion.

C'est le problème que semblent rencontrer les utiliseurs du moteur STIRLING dans son application sous-marine. et qui, selon des informations relevées dans des revues spécialisées, n'est semble-t-il pas encore complètement résolu.

L'objectif de la présente invention est la mise en oeuvre d'une machine thermique à combustion externe d'un hydrocarbure, à circuit de vapeur fermé, à surchauffe et soutirages pouvant fonctionner indifféremment à l'atmosphère libre ou en chambre close sans réducteur de vitesse.

Cet objectif est atteint par le procédé selon l'invention pour obtenir de l'énergie mécanique à une vitesse de sortie utilisable soit directement sur une ligne d'arbre, soit sur une machine réceptrice, sans réducteur de vitesse et mettant en oeuvre une machine thermique à combustion externe d'un hydrocarbure utilisant la vapeur d'échappement dans un circuit de vapeur fermé et fonctionnant selon le cycle de RANKINE-HIRN. à haute pression, surchauffe et soutirage et comprenant un générateur de vapeur relié à un moteur- détendeur volumétrique, dont la vapeur issue de ce moteur à moyenne pression est appliquée à des moyens où se produit la dernière expansion de la vapeur, des moyens pour condenser la vapeur détendue, des moyens pour extraire les condensats desdits moyens condenseurs, une réserve d'eau, des moyens pour mettre cette eau en circulation dans lesdits moyens condenseurs et dans un réchauffeur de vapeur et pour la recycler dans ledit générateur, caractérisée en ce que ledit moteur-détendeur volumétrique dit principal est relié à au moins un turbocompresseur à au moins deux étages et dont une fraction de la vapeur détendue à moyenne pression dans ledit moteur, est envoyée sur les turbines motrices dudit turbocompresseur où se produit ladite dernière expansion de la vapeur, et en ce que l'autre fraction de vapeur, détendue à moyenne pression dans ledit moteur, est recomprimée par ledit turbocompresseur, lequel est relié à un moteur volumétrique auxiliaire, pour y admettre la vapeur recomprimée, lequel moteur auxiliaire actionne la pompe alimentaire du générateur de vapeur et au moins une pompe d'extraction des condensats issus desdits moyens condenseurs.

Selon ce procédé, on relie l'arbre de prise de mouvement dudit moteur auxiliaire à l'arbre de prise de mouvement dudit moteur volumétrique principal, pour y appliquer l'énergie excédentaire non utilisée par le moteur auxiliaire, dans le but d'améliorer le rendement global de la machine.

Dans une machine selon l'invention, à fonctionnement anaérobie, dans laquelle le générateur de vapeur comporte un brûleur alimenté par un mélange d'hydrocarbure / oxygène dont le carburant est produit par une batterie de bouteilles et le comburant par une autre batterie de bouteilles d'oxygène sous pression et dont le CO₂ issu du générateur de vapeur est refroidi dans un refroidisseur qui réalise la séparation du CO₂ et de l'eau par condensation, lequel refroidisseur est relié au conduit d'évacuation des gaz de combustion dudit générateur, est ensuite comprimé et liquéfié pour être stocké dans lesdites bouteilles, en lieu et place de l'oxygène comburant au fur et à mesure qu'il est consommé, le moteur détendeur volumétrique principal, dans lequel est admise la vapeur provenant dudit générateur, est relié à deux turbocompresseurs à au moins deux étages, dont une fraction de la vapeur détendue à moyenne pression dans ledit moteur principal est envoyée sur les turbines motrices desdits turbocompresseurs, où se produit la dernière expansion de la vapeur et en ce qu'un desdits turbocompresseurs est relié audit réfrigérant, pour aspirer et comprimer le CO₂ issu de celui-ci en vue de sa liquéfaction.

Pour obtenir la phase finale de sa liquéfaction, on envoie le CO₂ comprimé dans un ballon réfrigérant et on le transfère ensuite à l'état liquéfié dans ladite batterie de bouteilles, en lieu et place de l'oxygène comburant.

Dans une application à un véhicule sous-marin de la machine selon l'invention, et pour obtenir la liquéfaction du CO₂ en vue de son stockage dans ladite batterie de bouteilles, on place ledit ballon liquéfacteur réfrigérant à l'extérieur de la coque dudit véhicule, au contact du milieu aquatique, pour refroidir le CO₂ par conduction thermique.

Dans son fonctionnement atmosphérique, la liquéfaction du CO₂ ne s'impose pas et l'air atmosphérique comburant est distribué par un ventilateur dont l'orifice de refoulement est relié par un conduit au brûleur du générateur de vapeur.

Le résultat de l'invention est une machine thermique à combustion externe d'un hydrocarbure, à circuit de vapeur fermé et fonctionnant selon le cycle de RANKINE-HIRN à haute pression, à vapeur surchauffée et soutirages, pouvant être organisée pour fonctionner soit en atmosphère libre, soit en chambre close, ou encore particulièrement conçue pour pouvoir passer d'une configuration à l'autre, par exemple dans son application au sous-marin en tant que moteur unique, et ne comportant pas de réducteur de vitesse.

Bien que pouvant fonctionner à l'atmosphère libre, la machine thermique à vapeur selon l'invention est particulièrement adaptée pour un fonctionnement anaérobie et est donc applicable au véhicule sous-marin.

Le choix de l'eau comme fluide travaillant en découle directement.

L'énergie disponible en dernière expansion, correspond à peu près aux besoins de l'ensemble des auxiliaires et servitudes particulières, liées au fonctionnement anaérobie, de telle sorte que la liquéfaction du CO₂ par compression et refroidissement, peut être réalisée dans des conditions thermodynamiques avantageuses, non envisageables avec le moteur STIRLING, ces travaux ne pouvant pas être prélevés directement sur son cycle non aménageable, dans ce type de moteur.

En regard des machines connues et notamment du moteur STIRLING, associé à ses auxiliaires de refroidissement des gaz et de traitement du CO₂, et considérées dans leur ensemble, la machine selon l'invention est beaucoup moins encombrante, sa compacité la rendant tout à fait adaptée à l'application aux véhicules sous-marins, où l'on sait que l'espace disponible est très restreint.

D'autres avantages et les caractéristiques de l'invention ressortiront de la description suivante d'une telle machine, dans ses deux versions "atmosphérique" et "anaérobie" en référence au dessin annexé sur lequel :
- la figure 1 est une vue en perspective schématique de la machine thermique selon l'invention ;
- la figure 2 est un schéma partiel de la machine de la figure 1, illustrant les appareillages et organes mis en oeuvre pour la production de la vapeur surchauffée HP et l'utilisation de la vapeur produite en première et deuxième expansion HP/MP, dans son fonctionnement atmosphérique.
- la figure 3 est un schéma partiel de ladite machine, illustrant le groupe turbocompresseur à deux étages, utilisant la dernière expansion de la vapeur BP, dans son fonctionnement atmosphérique ;
- la figure 4 est un schéma partiel de la machine de la figure 1, illustrant des appareillages et organes auxiliaires d'extraction des condensats et d'alimentation en eau du générateur de vapeur, dans son fonctionnement atmosphérique ;
- la figure 5 est un schéma partiel de la machine de la figure 1, représentant des appareillages et organes mis en oeuvre pour la production de la vapeur surchauffée HP et l'utilisation de cette vapeur en première et deuxième expansion HP/MP, dans son fonctionnement anaérobie.
- la figure 6 est un schéma partiel de la machine de la figure 1, illustrant le groupe turbocompresseur à deux étages, utilisant la dernière expansion de la vapeur BP, pour notamment comprimer le CO₂ en vue de sa liquéfaction, dans son fonctionnement anaérobie ;
- la figure 7 est un schéma partiel de la dite machine, représentant les appareillages et organes auxiliaires d'extraction des condensats et d'alimentation en eau du générateur de vapeur et de stockage du CO₂, dans son fonctionnement anaérobie.

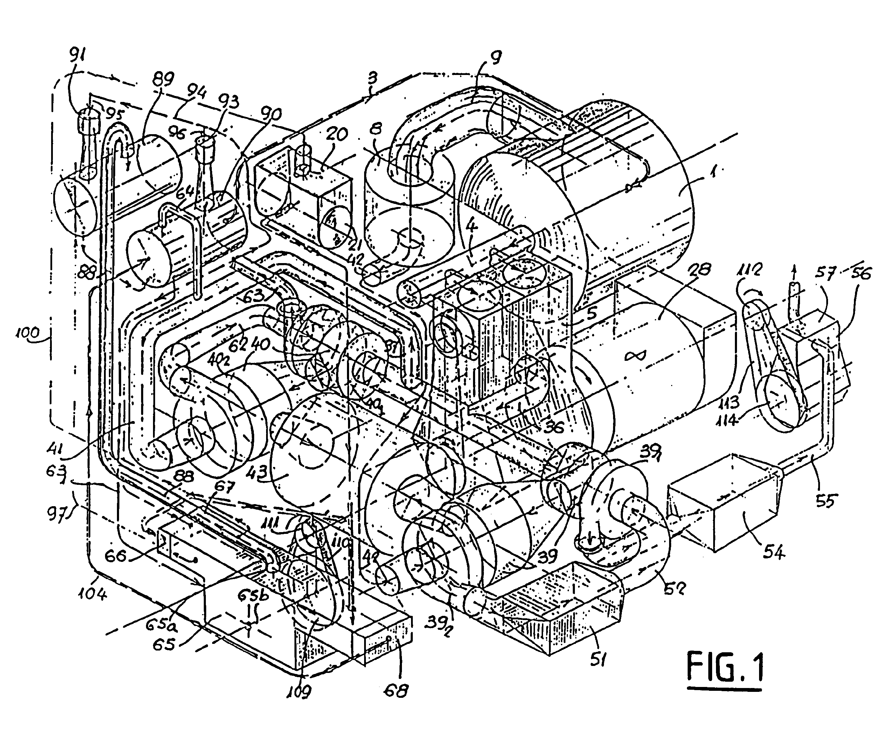

On se reporte d'abord aux figures 1 et 5 à 7 du dessin qui sont relatives à la machine thermique selon l'invention dans sa version à fonctionnement anaérobie.

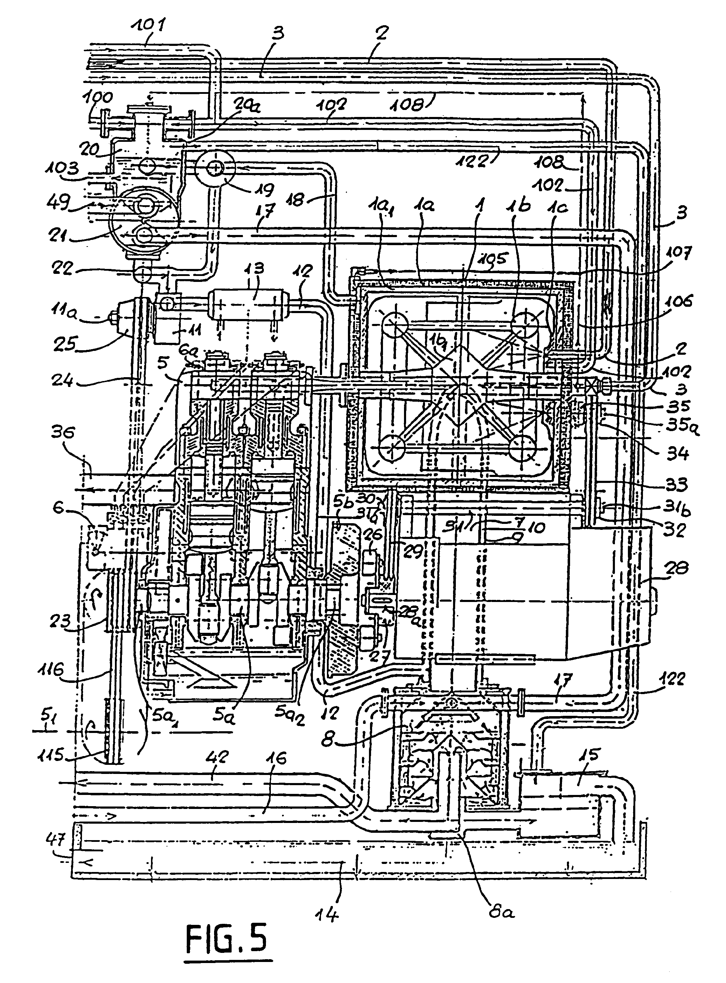

La vapeur surchauffée est produite par un générateur rotatif 1 (figure 5), du type de celui décrit dans le brevet antérieur du demandeur FR A 2 552 160 et se composant d'une enveloppe refroidie et calorifugée 1a d'une configuration générale cylindrique, dans laquelle est montée à rotation sur son axe de révolution, une roue de chauffe 1b.

Le générateur 1 est disposé horizontalement et comporte à une des ses extrémités, des brûleurs 1c disposés autour de l'arbre 1b₁ de la roue 1b et dont les têtes sont disposées à l'intérieur d'une enveloppe 1a.

Les brûleurs 1c sont alimentés par un mélange carburant/comburant, par exemple un mélange de gaz propane et d'oxygène, lequel est amené dosé jusqu'au brûleur 1c au moyen d'une tubulure 2.

L'eau d'alimentation est amenée dans l'axe de l'arbre 1b₁ au moyen d'une conduite 3. La vapeur surchauffée HP produite par le générateur 1 s'échappe dans l'axe dudit arbre 1b₁ et est canalisée par une tubulure 4, qui relie le générateur 1 à un moteur volumétrique à pistons alternatifs, par exemple à deux cylindres, fonctionnant suivant un cycle à deux temps et dont une description détaillée a été donnée dans ledit brevet antérieur. Ce moteur est dit "principal" en opposition à un autre moteur dit "auxiliaire" et dont il sera question plus loin au cours de la description de la machine.

Le cycle thermo-dynamique adopté, est celui de RANKINE avec, pour obtenir un rendement optimum, la surchauffe isobare de la vapeur. Ce procédé également connu sous le nom de cycle de HIRN est amélioré par soutirage de la vapeur en cours de détente. La vapeur issue du générateur est distribuée dans les cylindres du moteur 5 au moyen de soupapes d'injection de vapeur commandées hydrauliquement, sous l'effet d'une pompe d'injection 6, avec régulateur de vitesse, du type de celles communément utilisées pour l'alimentation des moteurs DIESEL, dans lesquels cylindres se produisent les expansions HP et MP dites encore première et deuxième expansion.

Le gaz CO₂ + H₂O produit par la combustion du mélange propane/oxygène dans le générateur, est évacué par une conduite 7 qui relie le générateur 1 à un refroidisseur 8 du type à ruissellement, où le gaz de combustion est refroidi et où la vapeur est condensée.

Autour et à l'extérieur de la conduite 7 est disposée coaxialement, une autre conduite 9 lesquelles conduites 7 et 9 constituent une double paroi 10 dans laquelle est mise en circulation l'eau de refroidissement de l'enveloppe du générateur 1. Ladite enveloppe 1a comporte aussi une double paroi 1a₁ dans laquelle circule l'eau de refroidissement. Cette eau est mise en circulation par une pompe 11, dont la tubulure de refoulement 12 aboutit dans la double paroi 10 formée par lesdites conduites 7 et 9. Au refoulement de la pompe 11, l'eau est mise en circulation dans un réfrigérant 13 de l'huile de graissage du moteur volumétrique principal 5.

L'eau de ruissellement, issue du fond 8a du refroidisseur des gaz d'échappement 8, est envoyée dans une bâche 14, où elle est refroidie après passage dans un bac-siphon 15. Dans une application "marine" ce mode de refroidissement est connu sous le nom "d'échangeur de coque".

L'eau de ruissellement est amenée au refroidisseur 8 par deux conduites 16/17 raccordées à sa partie supérieure.

L'eau de refroidissement du générateur 1, admise dans celui-ci par les conduits 10/12, est captée à la sortie de la double enveloppe 1a₁ par une tubulure 18 comportant un thermostat 19, qui aboutit à un réfrigérant 20 de l'eau de la bâche alimentaire 14 et dont l'échangeur 21 est relié par sa sortie à ladite tubulure 17.

L'orifice d'admission de la pompe 11 est en communication par une tubulure 22 avec ledit échangeur 21.

Le vilebrequin 5a du moteur volumétrique principal 5 comporte, calée sur une de ses extrémités 5a₁ une poulie 23 à plusieurs gorges pour entraîner, par une transmission à deux courroies, par exemple trapézoïdales 24, une autre poulie à deux gorges 25 calée sur l'arbre 11a de la pompe de circulation 11 de l'eau de refroidissement.

A son autre extrémité 5a₂, le vilebrequin 5 comporte, calé par tous moyens appropriés, un volant 5b auquel est fixé un accouplement élastique 26 comportant une poulie à deux gorges 27, coaxiale à l'accouplement 26 et au volant 5b, laquelle poulie 27 est calée sur l'arbre 28a d'un générateur électrique 28. De façon connue, l'accouplement 26 permet de pallier les défauts d'alignement du moteur 5 et du générateur électrique 28 et de filtrer toutes vibrations circulaires de la transmission.

La poulie 27 entraîne, au moyen de deux courroies par exemple trapézoïdales 29, une poulie 30 calée à l'une des extrémités 31a d'un arbre intermédiaire 31, lequel porte calé à son autre extrémité 31b une autre poulie à deux gorges 32. Celle-ci entraîne par deux autres courroies 33, une autre poulie 34 calée sur l'arbre d'entrée 35a d'un boîtier d'entraînement mécanique 35, dont le pignon de sortie coopère avec une couronne d'entraînement de la roue de chauffe 1b, pour mettre cette dernière en rotation à une vitesse convenable, en fonction du régime de production de la vapeur et de la centrifugation voulue des gaz.

Le générateur de vapeur 1 est à vaporisation instantanée, son timbre est par exemple de 100 bar pour une surchauffe limitée de l'ordre de 480°C.

L'effet centrifuge résultant de la rotation de la roue de chauffe 1, à tendance à créer une stratification des produits de combustion CO₂/vapeur d'eau et CO contenus dans l'enceinte 1a, de telle sorte que le CO₂ se trouve en nappe à la périphérie interne de l'enveloppe 1a, alors que le CO et la vapeur d'eau forment une nappe se rapprochant du centre de l'enceinte, afin qu'une partie de la vapeur d'eau produite opère la réduction du CO.

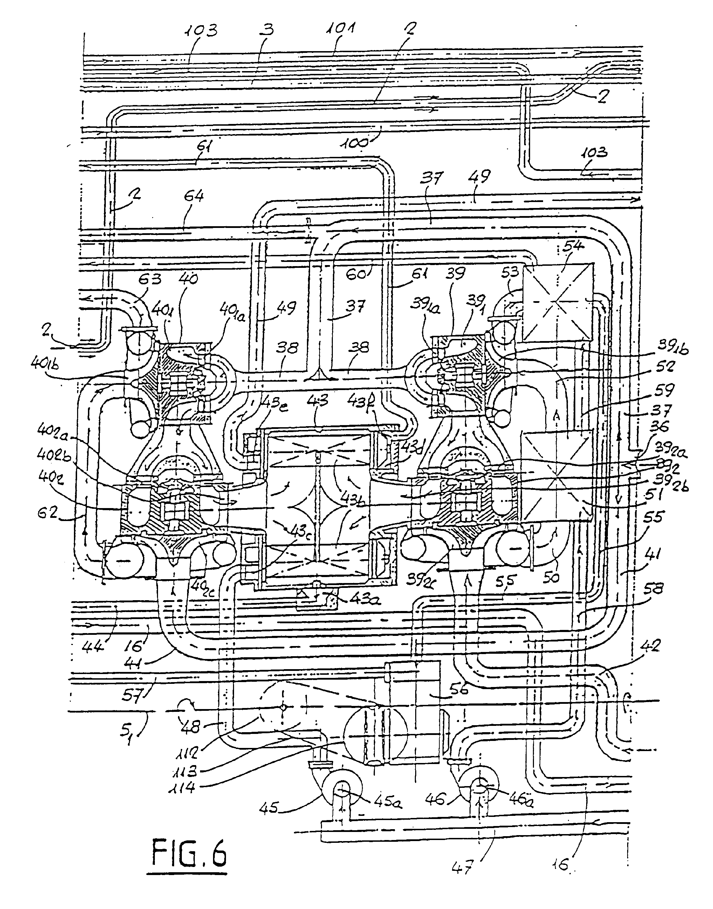

La vapeur à moyenne pression issue du moteur volumétrique principal 5 est canalisée par une conduite 36 (figure 6) se prolongeant par deux circuits, dont l'un est constitué par une tubulure 37 aboutissant à un collecteur 38, qui canalise une fraction de la vapeur MP sur les turbines motrices de deux turbocompresseurs à deux étages 39/40, où se produit la dernière expansion de la vapeur, et dont l'autre 41, canalise une fraction de la vapeur MP, issue du moteur principal 5, dans le turbocompresseur 40 pour la recomprimer en vue de son utilisation ultérieure, pour alimenter ledit moteur volumétrique auxiliaire et des éjecteurs dont il sera question plus loin.

Le CO₂, issu du refroidisseur à ruissellement 8, est canalisé par une tubulure 42 jusqu'au turbocompresseur 39, pour le comprimer en vue de sa liquéfaction.

La dernière expansion BP de la vapeur est réalisée dans des turbocompresseurs étagés. En raison des rapports de compression à réaliser, la solution à deux étages a été retenue. Ainsi, la vapeur MP collectée par le collecteur 38 est appliquée, d'abord sur la turbine motrice 39₁ₐ/40₁ₐ du premier étage 39₁/40₁ du turbocompresseur 39/40 et ensuite sur la turbine motrice 39₂ₐ/40₂ₐ du deuxième étage 39₂/40₂ dudit turbocompresseur.

A l'échappement 39_{2b}/40_{2b} des turbocompresseurs 39/40, la vapeur est envoyée dans un condenseur principal 43.

Selon une technique connue, les circuits de CO₂ 42 et de vapeur à recomprimer 41 sont à contre-courant du circuit de la vapeur BP appliquée sur les turbines des deux étages du turbocompresseur 39/40, en vue de sa dernière expansion.

Les condensats produits par le condenseur principal 43 sont recueillis dans un puits 43a dont est équipé ledit condenseur et évacués par une tubulure 44.

La bâche 14 est reliée à l'aspiration 45a/46a de deux pompes centrifuges, par exemple à fonctionnement électrique 45/46 par une conduite 47.

La pompe 45 refoule l'eau aspirée dans le bac 14, par une tubulure 48, dans le faisceau tubulaire 43b du condenseur 43. L'eau est admise dans ledit faisceau en 43c, passe à travers les tubes du faisceau et la chambre 43d et sort en 43e dudit condenseur 43.

Elle est ensuite canalisée par une conduite 49 qui relie le condenseur 43 à l'échangeur de chaleur 21, pour être amenée par la conduite 17 audit refroidisseur à ruissellement 8, du gaz de combustion issu du générateur 1.

Le CO₂ issu dudit refroidisseur 8 est canalisé par la conduite 42 et est admis dans la chambre de compression 39_{2c} du deuxième étage 39₂ du turbocompresseur 39.

Le gaz issu de ladite chambre 39_{2c} est envoyé, via une conduite 50, dans un premier refroidisseur 51 dont la sortie est reliée par une conduite 52, à la chambre de compression 39_{1b} du premier étage 39₁ dudit turbocompresseur 39.

Le CO₂ issu dudit premier étage 39₁ (deuxième étage de compression) est ensuite envoyé, via une autre conduite 53, dans un second refroidisseur 54.

Le CO₂ comprimé en vue de sa liquéfaction, issu du refroidisseur 54, est canalisé par une tubulure 55 jusqu'à l'aspiration d'un compresseur volumétrique 56 constituant un troisième et dernier étage de compression, ou le CO₂ est dans un état de vapeur saturante, en vue de son stockage après sa totale liquéfaction. Le gaz saturant refoulé par le compresseur 56 est canalisé par une tubulure 57. L'alimentation en eau de refroidissement des refroidisseurs de CO₂ 51/54 est assurée par la pompe centrifuge 46. Le refoulement de cette pompe est relié au refroidisseur 51, par une tubulure 58. La sortie du refroidisseur 51 est reliée à l'entrée du refroidisseur 54, par une tubulure 59. A la sortie du refroidisseur 54, l'eau est canalisée par une tubulure 60. Le condenseur principal 43 comporte dans sa zone froide, une prise de vide 43f à laquelle est raccordée une tuyauterie de vide 61. La fraction de vapeur d'eau MP, issue de l'échappement du moteur volumétrique principal 5, est admise en vue de sa régénération, dans la chambre de compression 40₂c du deuxième étage 40₂ du turbocompresseur 40 : la vapeur est, à la sortie de ladite chambre 40₂c, canalisée par une tubulure 62, jusqu'à l'entrée de la chambre 40_{1b} du premier étage 41 du turbocompresseur 40. La vapeur recomprimée à une pression de l'ordre de 11 bar, est refoulée à la sortie de la chambre 40_{1b} et est canalisée par une tubulure 63.

A la tubulure 37, qui amène la vapeur d'eau MP au turbocompresseur 39/40, est raccordée une conduite 64 de soutirage de cette vapeur MP.

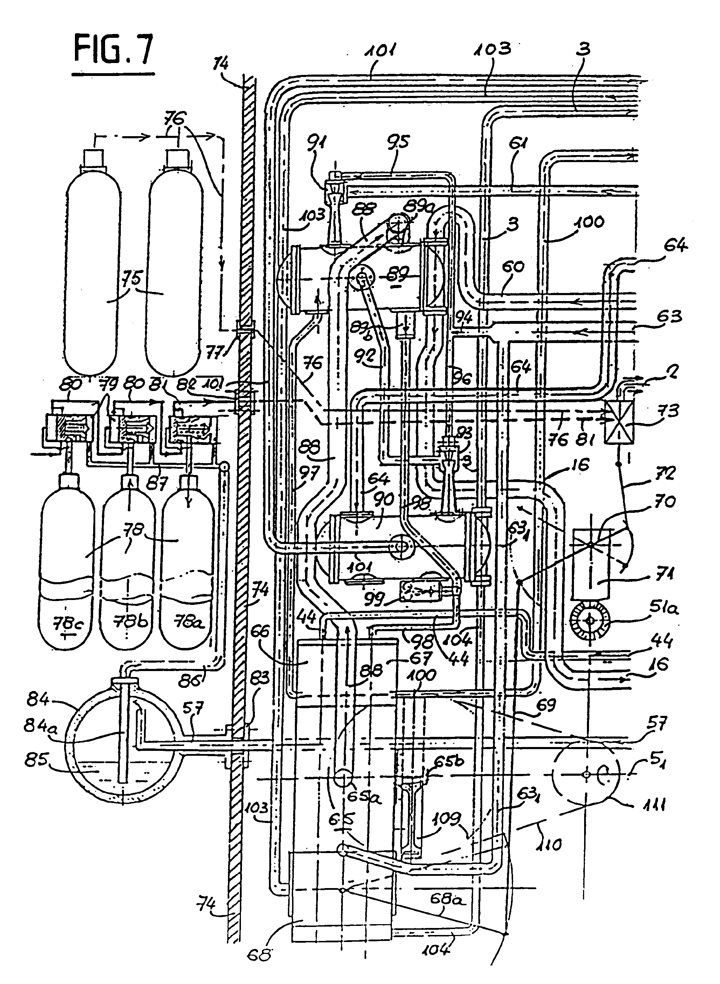

La vapeur régénérée issue, du turbocompresseur 40 est canalisée par la conduite 63 (figure 7), et est envoyée à travers une tubulure 63₁ jusqu'à l'admission d'un moteur volumétrique auxiliaire 65, lequel est par exemple du type connu sous l'appellation "petit cheval" qui actionne à une de ses extrémités deux pompes d'extraction 66/67 et à l'autre la pompe alimentaire 68 du générateur de vapeur 1.

Ladite pompe alimentaire 68 est par exemple à double corps, à débit variable, dont le réglage de débit est réalisé par un organe 68a relié par une tringlerie 69/70 à un régulateur de vitesse centrifuge 71 associé à un servomoteur hydraulique. Le régulateur de vitesse 71 commande par ailleurs au moyen d'une tringlerie 72 un régleur de débit/mélangeur 73 du propane/oxygène.

Dans son application au sous-marin, les batteries de bouteilles de propane et d'oxygène comburant sont placées à l'extérieur de la coque 74. Le gaz combustible (propane) est stocké dans des bouteilles 75.

Le propane, issu desdites bouteilles est conduit par une tuyauterie de petite section 76, traversant un passage de paroi 77, jusqu'au régleur de débit/mélangeur 73.

L'oxygène comburant est stocké dans une batterie de bouteilles 78 lesquelles sont équipées de clapets pressostatiques 79 reliés entre eux en série au moyen de tubulures de petite section 80. La batterie de bouteilles 78 est, par le clapet 79 de la bouteille 78a, directement en amont du régleur-mélangeur 73, reliée à celui-ci par une tubulure 81 traversant un autre passage de paroi 82.

Le CO₂ à l'état de vapeur saturante, provenant du compresseur volumétrique 56, est canalisé par la tubulure 57,et est amené sous pression par cette tubulure à travers un passage de paroi 83, dans un ballon liquéfacteur extérieur 84 mis au contact de l'eau environnant le sous-marin, où la dernière phase de liquéfaction du CO₂ est réalisée.

Le CO₂ liquéfié 85 est recueilli à la partie inférieure du ballon 84.

La contenance du ballon 84 est telle, qu'il sert de relais en vue du stockage du CO₂ liquide, dans les bouteilles 78 ayant auparavant contenu l'oxygène comburant, au fur et à mesure que l'oxygène est consommé.

Le ballon 84 comporte un tube plongeur 84a dont l'extrémité libre plonge dans le CO₂ liquide 85.

Le tube 84a est prolongé à l'extérieur du ballon 84, par une tuyauterie 86, aboutissant à un collecteur 87 auquel sont reliés les clapets pressostatiques 79.

Tel que cela est illustré à titre d'exemple sur le schéma de la figure 7, la bouteille 78a vide d'oxygène est en cours de remplissage de CO₂, sous l'effet des différences de pression qui s'établissent entre l'oxygène et le CO₂ dans le clapet 79 de la bouteille 78a. Il en sera de même lorsque le clapet 79 de la bouteille 78b se placera dans cette position, sous l'effet de ladite différence de pression et ainsi de suite pour les bouteilles suivantes.

La bouteille 78b est en service et débite par les tubulures 80/81 alors en communication. La bouteille 78c est en attente.

L'exemple donné à la figure 7 ne représente que 3 bouteilles d'oxygène 78 et 2 bouteilles 75 de gaz carburant (propane). Il est bien entendu que les batteries 75/78 peuvent comprendre un nombre quelconque de bouteilles.

La substitution de l'oxygène comburant par le CO₂ liquéfié dans la batterie de bouteilles 78 est un des points essentiels pour le fonctionnement anaérobie de la machine thermique selon l'invention, du fait que le problème majeur rencontré dans les machines de ce type et dans une application au sous-marin, est l'élimination du CO₂ issu de la combustion du mélange gaz carburant / oxygène comburant dans le générateur 1.

Selon l'invention, la solution adoptée est particulièrement intéressante, du fait que le remplacement des bouteilles 78 vides d'oxygène et remplies de CO₂ liquéfié, par des bouteilles d'oxygène neuves, peut être réalisé avec un maximum de simplicité et d'efficacité, grâce à leur disposition à l'extérieur de la coque du sous-marin. Il en est de même pour les bouteilles de gaz carburant 75, où les bouteilles vides de gaz peuvent être remplacées par des bouteilles pleines, que le sous-marin soit en surface ou même en plongée, en fonction toutefois des impératifs et des possibilités inhérents aux conditions dans lesquelles les plongeurs peuvent réaliser de tels travaux à des profondeurs admissibles, bien que dans des cas limites exceptionnels, de tels travaux puissent être réalisés par des robots.

L'échappement 65a du moteur volumétrique auxiliaire 65 est relié par une tubulure 88 à l'entrée 89a d'un condenseur secondaire 89.

L'installation comporte encore un réchauffeur 90 de l'eau d'alimentation du générateur de vapeur 1.

Le condenseur 89 est raccordé à un éjecteur de vapeur 91, lequel est relié par la tubulure 61 à la prise de vide 43f du condenseur principal 43, lequel éjecteur 91 aspire le mélange air/CO₂ non condensable par ledit condenseur 43. Le condenseur secondaire 89 réalise quatre fonctions distinctes :
a) refroidir et condenser la vapeur motrice provenant de l'éjecteur 91 et amenée à celui-ci par la tubulure 95 ;
b) refroidir le mélange air/CO₂ aspiré par la tubulure 61 dans le condenseur principal 43 et comprimé par l'éjecteur 91 ;
c) condenser la vapeur d'échappement du moteur auxiliaire 65 canalisée par la tubulure 88 ;
d) par ces refroidissements et condensations, drainer la chaleur à évacuer contenue dans l'eau mise en circulation, jusqu'à la bâche 14 par les tuyauteries 60/16.

Comme le condenseur 89, le réchauffeur 90 réalise aussi plusieurs fonctions :
a) refroidir et condenser la vapeur motrice provenant de l'éjecteur 93 et amenée à celui-ci par la tubulure 96 ;
b) refroidir le mélange air/CO₂ aspiré par la tubulure 92 reliée audit condenseur 89 ;
c) utiliser la chaleur contenue par la vapeur provenant du conduit de soutirage 64 pour réchauffer l'eau d'alimentation du générateur 1.

Le fluide moteur des deux éjecteurs 91/93 est constitué par une fraction de la vapeur recomprimée dans le turbocompresseur 40 et canalisée par la tubulure 63, en bout de laquelle tubulure la vapeur passe à travers un tuyau de plus petite section 94 se divisant en deux circuits constitués l'un, par une tuyauterie 95 aboutissant à l'entrée de l'éjecteur 91, l'autre par une autre tuyauterie 96 aboutissant à l'entrée de l'éjecteur 93.

La pompe d'extraction 66 est reliée par son orifice d'aspiration au puits 43a du condenseur 43 par ladite tubulure 44. Les condensats recueillis dans le puits 43a sont aspirés par la pompe 66 et refoulés dans le corps du condenseur 89, par une tubulure 97 raccordée d'une part à l'orifice de refoulement de la pompe 66 et à l'enveloppe dudit condenseur.

La pompe d'extraction 67 est reliée par son orifice d'aspiration à la fois au puits 89a du condenseur 89 et à un purgeur automatique à flotteur 99 qui constitue le puits du réchauffeur de l'eau d'alimentation 90.

Les condensats issus du réchauffeur 90 passent à travers ledit purgeur automatique 99 et sont refoulés avec les condensats issus du condenseur 89 par la pompe 67 jusqu'au vase d'expansion collecteur de gaz, constituant la partie supérieure du réfrigérant 20, par une tuyauterie 100 reliant l'orifice de refoulement de la pompe 67 et le vase-collecteur dudit réfrigérant.

La fraction de vapeur MP, soutirée à l'échappement du moteur volumétrique principal 5, canalisée par la tubulure 64 est envoyée dans le réchauffeur 90 auquel ladite tubulure est raccordée et est utilisée comme fluide chauffant, pour élever la température de l'eau d'alimentation du générateur de vapeur. L'air et le CO₂ s'échappant du réchauffeur 90 sont canalisés par une tubulure 101, pour être d'une part, recueillis par le vase d'expansion du réfrigérant 20 et d'autre part, recyclés par une tuyauterie 102 dans la chambre de combustion du générateur de vapeur 1.

L'eau d'alimentation du générateur 1 est captée par une tubulure 103, raccordée d'une part au réfrigérant/bâche 20 et d'autre part, à l'orifice d'aspiration de la pompe alimentaire 68 : l'eau aspirée dans le réfrigérant 20 est refoulée par la pompe alimentaire 68 au générateur 1.

Le refoulement de la pompe alimentaire 68 est raccordé par une tubulure 104 au réchauffeur 90, où l'eau est chauffée entre autre par la vapeur de soutirage amenée par la tubulure 64.

L'eau chaude issue du générateur 90 est envoyée par ladite tubulure 3 à travers l'arbre 1b₁ de la roue de chauffe 1b du générateur, laquelle tubulure est raccordée au réchauffeur 90 et audit générateur.

L'eau mise en circulation par la pompe centrifuge 46, dans le refroidisseur CO₂ 51/54 et canalisée à la sortie du réfrigérant 54 par la tubulure 60, est envoyée dans le condenseur 89 et est ensuite envoyée par la conduite 16, au refroidisseur à ruissellement 8 du gaz de combustion du générateur de vapeur 1.

Le mélange de gaz carburant/comburant (propane/Oxygène) est envoyé au brûleur 1c du générateur 1 par ladite conduite 2 raccordée au régleur/mélangeur 73 et au brûleur 1c dudit générateur de vapeur 1.

Les fuites d'eau issues des moyens d'étanchéité de l'arbre 1b₁ de la roue de chauffe 1b sont récupérées par deux tuyauteries 105/106 de petite section se rejoignant en 107 et sont envoyées par une tubulure commune 108 dans le réfrigérant 20.

Le moteur volumétrique auxiliaire 65 porte, calé à une des extrémités de son vilebrequin 65b, un volant à gorges 109 représenté en coupe et en vue rabattue sur le schéma, cinématiquement lié à un arbre intermédiaire 5₁, par une transmission à courroies 110 et une poulie 111. L'arbre 5₁ comporte un pignon conique 5₁ₐ qui assure l'entraînement mécanique du régulateur 71.

Sur ledit arbre 5₁ est en outre calée une seconde poulie à gorges 112 qui entraîne, par une transmission par courroie 113/poulie 114, le compresseur volumétrique 56. Les poulies 112/114 et la courroie 113 sont représentées en vue rabattue sur le schéma.

Enfin, l'arbre 5₁ comporte en outre une poulie à gorges 115 disposée en regard de la poulie 23, calée sur l'extrémité 5a₁ du vilebrequin 5a du moteur principal et autour desquelles poulies 115/23 s'enroule partiellement un jeu de deux courroies 116, par exemple à section trapézoïdale.

Cette conception permet d'appliquer sur le vilebrequin du moteur principal, la puissance excédentaire du moteur auxiliaire 65 et non utilisée par les pompes d'extraction 66/67 et alimentaire 68, ou réciproquement, dans le cas où le moteur auxiliaire 65 est déficitaire.

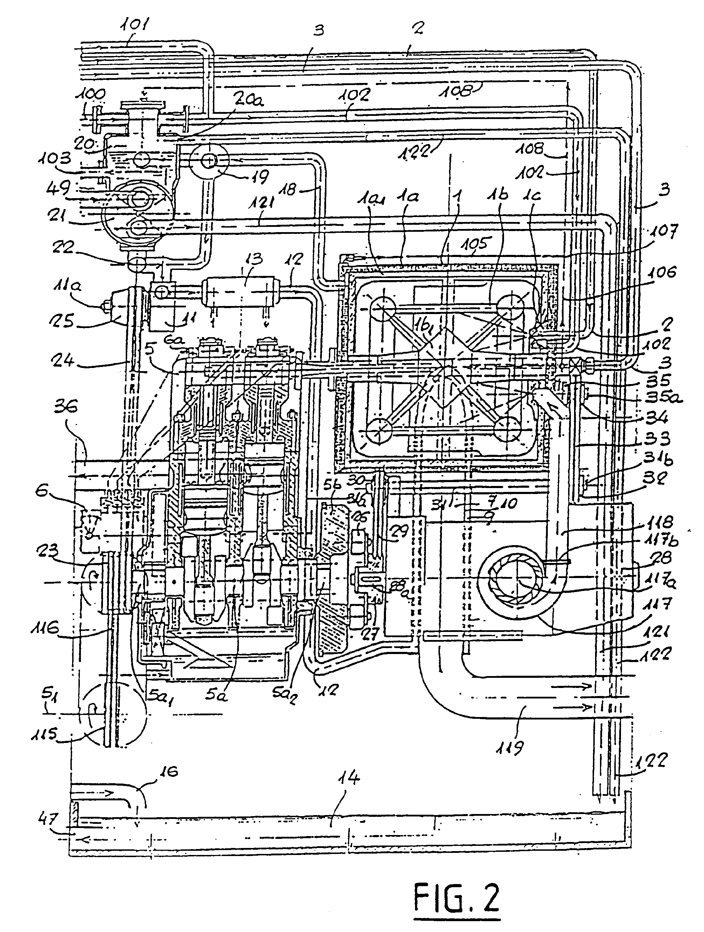

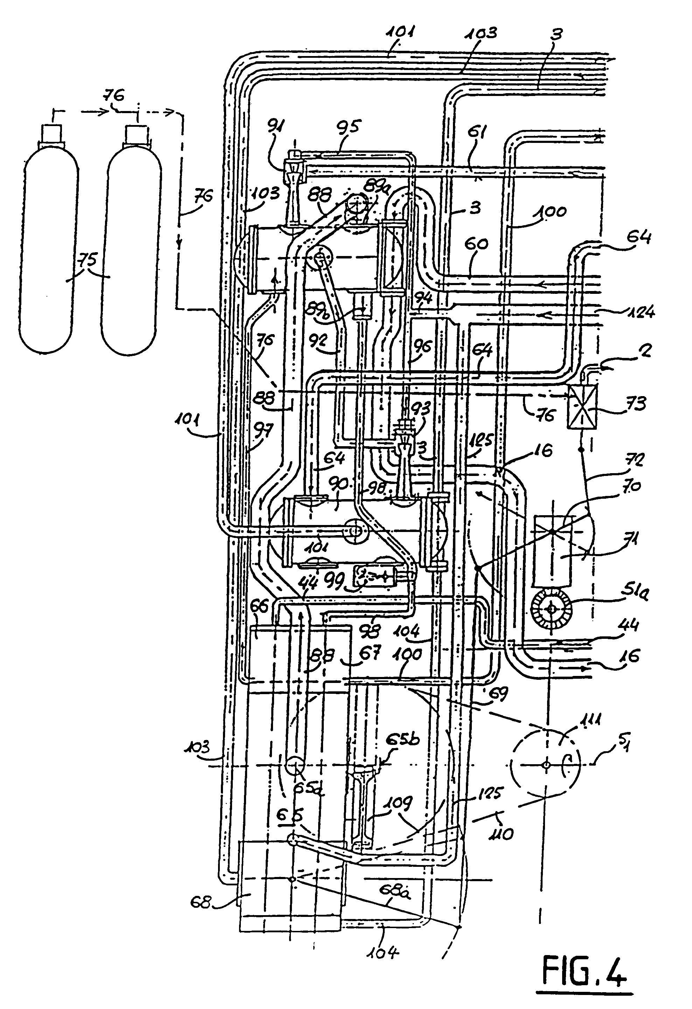

On se reporte maintenant aux figures 2 à 4 du dessin qui sont relatives à la machine thermique selon l'invention, dans sa version à fonctionnement atmosphérique.

Les parties homologues déjà citées lors de la description des schémas partiels des figures 5 à 7 et de la figure 1 sont affectées des mêmes références et ne seront pas de nouveau décrites dans le but d'alléger la description.

Selon cette version (figure 2) le brûleur 1c est alimenté en carburant par la canalisation 2, par exemple en propane, comme dans la version anaérobie, le gaz étant stocké dans une batterie de bouteilles 75, mais peut être aussi alimenté en fioul.

Le mélange apporté au brûleur 1c se compose de carburant (propane ou fioul) et d'air atmosphérique soufflé. L'air est apporté dans le brûleur par un ventilateur 117, dont l'orifice d'aspiration 117a est relié par une conduite à une prise d'air extérieur. Son orifice de refoulement 117b est relié au brûleur 1c par une tubulure 118.

Le gaz de combustion CO₂ + H²O s'échappe à l'atmosphère par une tubulure d'échappement 119, raccordée à la tubulure 7 du générateur de vapeur 1.

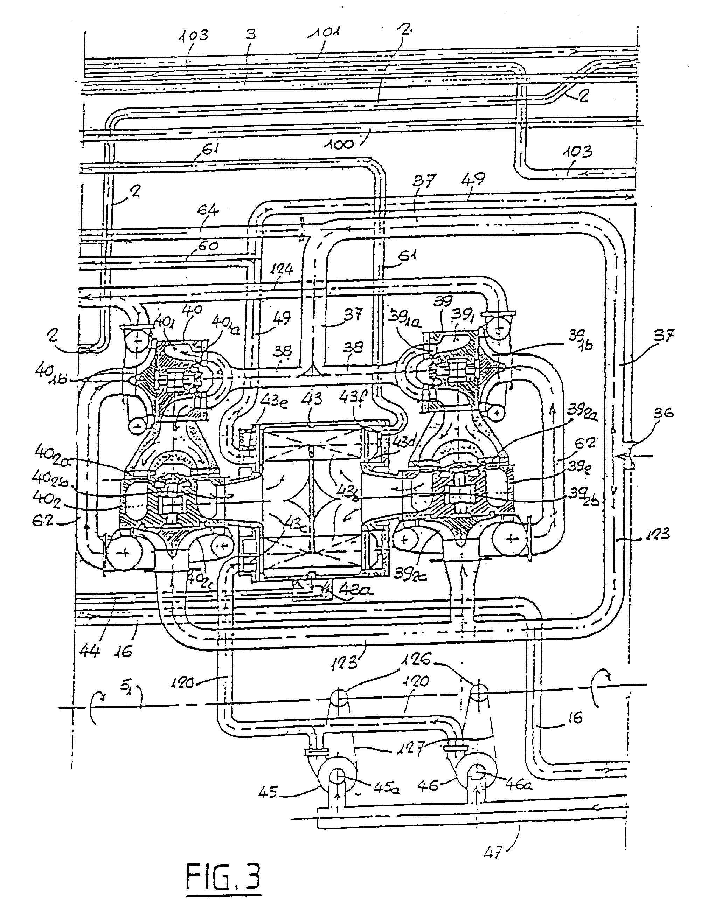

Tel qu'illustré à la figure 3 les deux turbocompresseurs 39/40 sont montés en parallèle dans la version atmosphérique de la machine.

La vapeur à moyenne pression, issue du moteur volumétrique principal 5 est canalisée par la conduite 36 qui se prolonge par deux circuits, dont l'un 37 aboutit au collecteur 38 qui canalise une fraction de la vapeur sur les turbines motrices de deux turbocompresseurs à deux étages 39/40, où se produit la dernière expansion de la vapeur. Le fonctionnement du turbocompresseur 40 est identique à celui du turbocompresseur de la figure 6. Les deux turbocompresseurs étant montés en parallèle, le circuit de vapeur MP motrice est identique pour les deux turbocompresseurs 39/40. La vapeur issue des deuxièmes étages 39₂/40₂ est envoyée dans le condenseur 43. Celui-ci est relié par une tubulure 120 au refoulement des deux pompes 45/46 qui dans la version à fonctionnement atmosphérique, sont par exemple montées en parallèle. Après son passage dans le condenseur principal 43, l'eau canalisée par la conduite 49 est envoyée d'une part, par la tubulure 60, au condenseur secondaire 89 et d'autre part, par la tubulure 49 à travers l'échangeur 21 du réfrigérant/bâche 20. L'eau issue de l'échangeur 21 est canalisée par une tubulure 121 jusqu'à la bâche 14.

A sa partie supérieure, le réfrigérant/bâche 20 comporte, comme dans la version anaérobie, un trop plein 20a auquel est raccordé une tubulure 122 pour amener l'eau excédentaire du réfrigérant à la bâche 14.

Dans la version anaérobie la tubulure 122 débouche dans le bac siphon 15 qui déverse dans la bâche 14.

La fraction de vapeur MP provenant de la conduite 36, en vue de sa recompression, est amenée au turbocompresseur 39/40, par une tubulure 123. Le circuit de vapeur en vue de sa recompression par le turbocompresseur 39, est identique à celui du circuit du turbocompresseur 40, tel qu'il a été décrit en référence à la figure 6. Ainsi, les deux étages 39₁/39₂ sont reliés par une tubulure calorifugée 62. La vapeur recomprimée à une pression de l'ordre de 11 bar, issue des étages 39₁/40₁ est collectée par une conduite calorifugée 124. Une fraction de cette vapeur régénérée, est amenée en tant que fluide moteur, jusqu'aux éjecteurs 91/93, par les tubulures 94/95/96, l'autre fraction est envoyée par une tubulure 125, audit moteur volumétrique auxiliaire 65.

Dans le schéma de la figure 3 et contrairement à celui de la figure 6 où les pompes sont à fonctionnement électrique, les pompes 45/46 sont par exemple entraînées par l'arbre 5₁, commun aux deux moteurs volumétriques, principal 5 et auxiliaire 65, par l'intermédiaire de transmissions à poulies 126 calées sur l'arbre 5₁ et courroies 127.

La machine selon l'invention a été décrite dans ses deux versions, à fonctionnement anaérobie et atmosphérique. On notera que la version anaérobie peut être tout à fait adaptée pour fonctionner à l'air atmosphérique, à condition de monter sur le conduit d'échappement des gaz de combustion 7, une vanne à trois voies et un conduit supplémentaire pour évacuer ces gaz à l'atmosphère.

Le circuit de compression du CO₂ en vue de son stockage sera donc isolé par une autre vanne à trois voies montée sur le circuit de vapeur MP, pour canaliser une fraction de la vapeur détendue, issue du moteur volumétrique principal 5, sur les turbines motrices des deux étages 40₁/40₂ du turbocompresseur 40 et envoyer la vapeur restante à travers ledit turbocompresseur en vue de sa recompression.

Le compresseur volumétrique de CO₂ 56 sera donc mis hors service par interposition d'un embrayage, monté entre la prise de mouvement 5₁ commune aux moteurs principal 5 et auxiliaire 65 et ledit compresseur volumétrique 56.

Un ventilateur, pour amener l'air comburant au brûleur 1c du générateur de vapeur sera monté, tel que cela a été décrit en référence à la figure 2.

Bien entendu dans ce fonctionnement, l'air atmosphérique comburant est fourni par ledit ventilateur 117, et donc la batterie de bouteilles d'oxygène 75 est isolée.

De ce fait, le mélangeur 73 ne régule que le carburant.

Selon cette conception, le générateur de vapeur 1 fonctionne alors avec un excès d'air comburant.

## Revendications

1. Machine thermique à combustion externe d'un hydrocarbure, utilisant la vapeur d'échappement dans un circuit de vapeur fermé, fonctionnant selon le cycle de RANKINE-HIRN, à haute pression, surchauffe et soutirage et comprenant un générateur de vapeur (1), relié à un moteur-détendeur volumétrique (5), dont la vapeur issue de ce moteur, à moyenne pression, est appliquée à des moyens où se produit la dernière expansion de la vapeur, des moyens (43/89) pour condenser la vapeur détendue, des moyens (66/67) pour extraire des condensats desdits moyens condenseurs, une réserve d'eau (14/20), des moyens (45/46) pour mettre cette eau en circulation dans lesdits moyens condenseurs et dans un réchauffeur de vapeur (90) et (68) pour la recycler dans ledit générateur(1) caractérisée en ce que ledit moteur-détendeur volumétrique (5), dit principal, est relié à au moins un turbocompresseur(40) à au moins deux étages (40₁/40₂) et dont une fraction de la vapeur détendue à moyenne pression dans ledit moteur (5), est envoyée sur les turbines motrices (40₁ₐ/40₂ₐ) dudit turbocompresseur, où se produit ladite dernière expansion de la vapeur, et en ce que l'autre fraction de vapeur détendue à moyenne pression dans ledit moteur (5), est recomprimée par ledit turbocompresseur (40), lequel est relié à un moteur volumétrique auxiliaire (65), pour y admettre la vapeur recomprimée, lequel moteur auxiliaire (65) actionne la pompe alimentaire (68) du générateur de vapeur (1) et au moins une pompe d'extraction des condensats (66/67) issus desdits moyens condenseurs (43/89).

2. Machine selon la revendication 1 caractérisée en ce que l'arbre de prise de mouvement (65b) dudit moteur auxiliaire (65), est relié à l'arbre de prise de mouvement (5a) dudit moteur volumétrique principal (5), pour améliorer le rendement de la machine, en y appliquant l'énergie excédentaire du moteur auxiliaire (65) non utilisée.

3. Machine selon l'une quelconque des revendications 1 et 2 dans son fonctionnement atmosphérique, caractérisée en ce qu'elle comporte, en outre, un ventilateur (117) d'air atmosphérique, dont l'orifice de refoulement (117b) est relié par un conduit (118), au brûleur 1c du générateur de vapeur (1) pour admettre l'air comburant dans ledit générateur.

4. Machine selon la revendication 1 dans son fonctionnement anaérobie, dont le générateur de vapeur (1) comporte un brûleur (1c) d'un hydrocarbure provenant d'une batterie de bouteilles (75), mélangé à l'oxygène comburant produit par une batterie de bouteilles d'oxygène comprimé (78), dont le CO₂ issu du générateur de vapeur 1 est refroidi dans un refroidisseur (8) relié au conduit d'évacuation des gaz de combustion dudit générateur (1), est ensuite comprimé et liquéfié pour être stocké dans lesdites bouteilles (78), en lieu et place de l'oxygène comburant au fur et à mesure qu'il est consommé, caractérisée en ce que le moteur-détendeur volumétrique principal (5) dans lequel est admise la vapeur provenant dudit générateur 1, est relié à deux turbocompresseurs (39/40) à au moins deux étages (39₁/39₂ - 40₁/40₂) dont une fraction de la vapeur détendue à moyenne pression dans ledit moteur principal (5), est envoyée sur les turbines motrices (39₁ₐ/39₂ₐ - 40₁ₐ/40₂ₐ) desdits turbocompresseurs, où se produit la dernière expansion de la vapeur et en ce qu'un desdits turbocompresseurs (39) est relié audit refroidisseur (8), pour aspirer et comprimer le CO₂ issu de celui-ci en vue de sa liquéfaction.

5. Machine selon la revendication 4 caractérisée en ce qu'elle comporte, au refoulement du circuit de CO₂, des étages (39₁/39₂) du turbocompresseur (39), des moyens réfrigérants (51/54) montés en série, dont le dernier réfrigérant (54) est relié à un compresseur volumétrique (56) pour parfaire la compression du CO₂ en vue de sa liquéfaction, lequel compresseur volumétrique (56), est relié à un ballon liquéfacteur réfrigérant (84), où se produit la phase finale de la liquéfaction du CO₂, lequel ballon (84) est lui-même relié à ladite batterie de bouteilles (78), pour y transférer le CO₂ liquéfié et en ce que l'arbre de prise de mouvement dudit compresseur volumétrique (56) est relié à l'arbre de prise de mouvement (65b) du moteur auxiliaire (65).

6. Machine selon la revendication 5 équipant un véhicule sous-marin caractérisée en ce que le bac réfrigérant du CO₂ (84) et les batteries de bouteilles de carburant (75) et d'oxygène comburant (78) sont placés à l'extérieur de la coque (74) dudit véhicule.

7. Machine selon l'une quelconque des revendications 1 à 6 caractérisée en ce que le deuxième étage (39₂/40₂) du circuit de vapeur motrice desdits turbocompresseurs (39/40) est relié à un condenseur (43) qui reçoit la vapeur détendue à basse pression en aval de la dernière expansion, lequel condenseur (43) est relié à ladite pompe d'extraction (66).

8. Machine selon l'une quelconque des revendications 1 à 7 caractérisée en ce que la tubulure d'échappement (63/124) de la vapeur recomprimée par le turbocompresseur de vapeur (39/40) est reliée d'une part, par une conduite (63₁/125), à l'admission dudit moteur volumétrique auxiliaire (65) et d'autre part, au moyen d'autres conduites (95/96), à l'entrée de deux éjecteurs (91/93) où ladite vapeur y est appliquée comme fluide moteur, dont l'un (91) est raccordé à un condenseur secondaire (89) et est relié par une tubulure (61) à la zone froide du condenseur principal (43), pour le maintenir sous vide et dont l'autre (93) est raccordé à un réchauffeur (90) et est relié par une tubulure (92) audit condenseur secondaire (89) pour maintenir le vide dans celui-ci.

9. Procédé pour obtenir de l'énergie mécanique à une vitesse de sortie utilisable, soit directement sur une ligne d'arbre, soit sur une machine réceptrice, sans réducteur de vitesse et mettant en oeuvre une machine thermique à combustion externe d'un hydrocarbure, utilisant la vapeur d'échappement dans un circuit de vapeur fermé fonctionnant selon le cycle de RANKINE-HIRN à haute pression, surchauffe et soutirage et comprenant un générateur de vapeur (1) relié à un moteur-détendeur volumétrique (5), dont la vapeur issue de ce moteur à moyenne pression est appliquée à des moyens où se produit la dernière expansion de la vapeur, des moyens (43/89) pour condenser la vapeur détendue, des moyens (66/67) pour extraire les condensats desdits moyens condenseurs, une réserve d'eau (14/20), des moyens pour mettre cette eau en circulation dans lesdits moyens condenseurs et dans un réchauffeur à vapeur (90) et (68) pour la recycler dans ledit générateur (1), caractérisé en ce que l'on envoie une fraction de la vapeur détendue à moyenne pression, issue dudit moteur volumétrique, dit principal (5), pour actionner au moins un turbocompresseur (40) à au moins deux étages (40₁/40₂), où se produit la dernière expansion de la vapeur et en ce qu'on recomprime dans ledit turbocompresseur (40), l'autre fraction de la vapeur détendue à moyenne pression et qu'on applique cette vapeur recomprimée à un moteur volumétrique auxiliaire (65) qui actionne la pompe alimentaire (68) du générateur de vapeur (1) et au moins une pompe d'extraction des condensats (66/67) issus desdits moyens condenseurs (43/89).

10. Procédé selon la revendication 4 caractérisé en ce que l'on relie l'arbre de prise de mouvement (65b) dudit moteur auxiliaire (65) à l'arbre de prise de mouvement dudit moteur volumétrique principal

## Patentansprüche

1. Thermische Maschine mit externer Verbrennung eines Kohlenwasserstoffs, welche einen sich entspannenden Dampf in einem geschlossenen Dampfkreislauf verwendet und welche bei hohem Druck, Überhitzung und Füllung nach dem RANKINE-HIRN-Zyklus arbeitet und die umfaßt einen Dampfgenerator (1), der an einen volumetrischen Expansionsmotor (5) angeschlossen ist und der aus diesem Motor austretende Dampf mittleren Drucks Mitteln zugeführt wird, wo die letzte Expansion des Dampfs stattfindet, Mittel (43/89) zum Kondensieren des expandierten Dampfs, Mittel (66/67) zum Abzug des Kondensats vom Kondensationsmittel, ein Wasserreservoir (14/20), Mittel (45/46) zum Zirkulieren dieses Wassers in diesem Kondensationsmittel und in einem Dampfvorwärmer (90) und (68) zum Zurückführen in den Generator (1), **dadurch gekennzeichnet**, daß der volumetrische Expansionsmotor (5), als Hauptmotor bezeichnet, an mindestens einen, mindestens zwei Stufen (40₁/40₂) aufweisenden Turbokompressor (40) angeschlossen ist und ein Teil des expandierten Dampfs mittleren Drucks in diesem Motor (5) auf die Antriebsturbinen (40₁ₐ/40₂ₐ) dieses Turbokompressors geleitet wird, um die letzte Expansion des Dampfs zu erzeugen, und daß der andere Teil des expandierten Dampfs mittleren Drucks in diesem Motor (5) durch den Turbokompressor (40) wieder verdichtet wird, wobei letzterer an einen volumetrischen Zusatzmotor (65) angeschlossen ist, um dort den wieder verdichteten Dampf zuzuführen, und der Zusatzmotor (65) die Speisepumpe (68) des Dampfgenerators (1) und mindestens eine Absaugpumpe (66/67) für das vom Kondensationsmittel (43/89) austretende Kondensat antreibt.

2. Maschine nach Anspruch 1, **dadurch gekennzeichnet**, daß die Antriebswelle (65b) des Zusatzmotors (65) mit der Antriebswelle (5a) des volumetrischen Hauptmotors (5) verbunden ist, um den Wirkungsgrad der Maschine zu verbessern, indem dort überschüssige, nicht benötigte Energie des zusätzlichen Motors (65) eingeleitet wird.

3. Maschine nach einem der Ansprüche 1 oder 2 bei ihrem atmosphärischen Betrieb, **dadurch gekennzeichnet**, daß sie unter anderem einen Ventilator (117) für Atmosphärenluft aufweist, dessen Drucköffnung (117b) über eine Leitung (118) mit dem Brenner (1c) des Dampfgenerators (1) verbunden ist, um in den Generator Verbrennungsluft zuzuführen.

4. Maschine nach Anspruch 1 bei ihrem anaerobischen Betrieb, bei der der Dampfgenerator (1) mit einem aus einer Flaschenbatterie (75) stammenden und mit aus einer Sauerstoffdruckflaschenbatterie (78) stammenden Verbrennungssauerstoff vermischten Kohlenwasserstoff betrieben wird und bei der der CO₂-Ausstoß des Dampfgenerators (1) in einem Kühler (8) abgekühlt wird, der an die Verbrennungsabgasleitung des Generators (1) angeschlossen ist und anschließend komprimiert und verflüssigt wird, um in den genannten Flaschen (78) anstelle des Verbrennungssauerstoffs, in dem Maße, wie dieser verbraucht wird, gelagert zu werden, **dadurch gekennzeichnet**, daß der volumetrische Hauptexpansionsmotor (5), der mit dem vom Generator (1) stammenden Dampf gespeist wird, an zwei mindestens zwei Stufen (39₁/39₂ - 40₁/40₂) aufweisende Turbokompressoren (39/40) angeschlossen ist, und ein Teil des expandierten Dampfs mittleren Drucks in diesem Hauptmotor (5) auf die Antriebsturbinen (39₁ₐ/39₂ₐ - 40₁ₐ/40₂ₐ) dieser Turbokompressoren geleitet wird, wo die letzte Expansion des Dampfs erzeugt wird und daß einer der Turbokompressoren (39) mit dem Kühler (8) verbunden ist, um den CO₂-Ausstoß im Hinblick auf seine Verflüssigung anzusaugen und zu komprimieren.

5. Maschine nach Anspruch 4, **dadurch gekennzeichnet**, daß sie an der Druckseite des CO₂-Kreislaufs Stufen (39₁/39₂) des Turbokompressors (39) und in Serie angeordnete Kühlmittel (51/54) aufweist, wobei der letzte Kühler (54) an einen volumetrischen Kompressor (56) angeschlossen ist, um das Komprimieren des CO₂ im Hinblick auf dessen Verflüssigung auszuführen und der volumetrische Kompressor (56) an ein Verflüssigungskühlergefäß (84) angeschlossen ist, wo die Endphase der CO₂-Verflüssigung stattfindet und dieses Gefäß (84) seinerseits an die Flaschenbatterie (78) angeschlossen ist, um dieser das verflüssigte CO₂ zuzuführen, und daß die Antriebswelle dieses volumetrischen Kompressors (56) mit der Antriebswelle (65b) des Zusatzmotors (65) verbunden ist.

6. Maschine nach Anspruch 5, eingebaut in ein Unterseeboot, **dadurch gekennzeichnet**, daß das CO₂-Kühlgefäß (84) und die Flaschenbatterien für den Kraftstoff (75) und den Verbrennungssauerstoff (78) außerhalb des Bootskörpers (74) angeordnet sind.

7. Maschine nach einem der Ansprüche 1 bis 6, **dadurch gekennzeichnet**, daß die zweite Stufe (39₂/40₂) des Antriebsdampfkreises der Turbokompressoren (39/40) an einen Kondensator (43) angeschlossen ist, der expandierten Dampf niederen Drucks, der letzten Expansion nachgeschaltet, erhält und der Kondensator (43) mit der Absaugpumpe (66) verbunden ist.

8. Maschine nach einem der Ansprüche 1 bis 7, **dadurch gekennzeichnet**, daß die Auspuffleitung (43/124) des durch den Dampfturbokompressor (43/124) wieder verdichteten Dampfs einerseits an eine Leitung (43₂/125) zur Beaufschlagung des volumetrischen Zusatzmotors (65) und andererseits mittels anderer Leitungen (95/96) an den Eingang von zwei Ejektoren (91/93) angeschlossen ist, wo der Dampf wie ein Fluidmotor wirkt, von denen der eine (91) mit einem Sekundärkondensator (89) verbunden und über eine Leitung (91) an die Kältezone des Hauptkondensators (43) angeschlossen ist, um diesen bei Unterdruck zu halten, und von denen der andere mit einem Vorwärmer (90) verbunden und über eine Leitung (92) an den Sekundärkondensator (89) angeschlossen ist, um den Unterdruck in diesem zu halten.

9. Verfahren zur Erzeugung mechanischer Energie mit einer Geschwindigkeit nützlichen Austrags, sei es direkt über eine Wellenlinie, sei es über eine Empfangsmaschine ohne Geschwindigkeitsverlust, unter Inbetriebnahme einer thermischen Maschine mit externer Verbrennung eines Kohlenwasserstoffs, welche einen sich entspannenden Dampf in einem geschlossenen Dampfkreislauf verwendet und welche bei hohem Druck, Überhitzung und Füllung nach dem RANKINE-HIRN-Zyklus arbeitet und die umfaßt einen Dampfgenerator (1), der an einen volumetrischen Expansionsmotor (5) angeschlossen ist und der aus diesem Motor austretende Dampf mittleren Drucks Mitteln zugeführt wird, wo die letzte Expansion des Dampfs stattfindet, Mittel (43/89) zum Kondensieren des expandierten Dampfs, Mittel (66/67) zum Abzug des Kondensats vom Kondensationsmittel, ein Wasserreservoir (14/20), Mittel (45/46) zum Zirkulieren dieses Wassers in diesem Kondensationsmittel und in einem Dampfvorwärmer (90) und (68) zum Zurückführen in den Generator (1), **dadurch gekennzeichnet**, daß man einen Teil des expandierten Dampfs mittleren Drucks, der aus dem volumetrischen Expansionsmotor (5), als Hauptmotor bezeichnet, austritt, zur Betätigung mindestens eines, mindestens zwei Stufen (40₁/40₂) aufweisenden Turbokompressors (40) ableitet, wo die letzte Expansion des Dampfs stattfindet, und daß man den anderen Teil des expandierten Dampfs mittleren Drucks im Turbokompressor (40) wieder verdichtet, und daß man den wieder verdichteten Dampf einem volumetrischen Zusatzmotor (65) zuführt, der die Speisepumpe (68) des Dampfgenerators (1) und mindestens eine Absaugpumpe (66/67) für das vom Kondensationsmittel (43/89) austretende Kondensat antreibt.

10. Verfahren nach Anspruch 9, **dadurch gekennzeichnet**, daß man die Antriebswelle (65b) des Zusatzmotors (65) mit der Antriebswelle des volumetrischen Hauptmotors verbindet.

## Claims

1. Thermal engine with external combustion of a hydrocarbon, utilising the exhaust steam in a closed steam circuit operating according to the RANKINE-HIRN cycle involving superheating and drawing off the steam at high pressure and comprising a steam generator (1) attached to a volumetric engine cylinder (5), whose medium pressure steam output is applied to means where the last expansion of the steam takes place, means (43, 89) for condensing the expanded steam, means (66, 67) for extracting the condensation of the said condenser means, a water reservoir (14, 20), means (45, 46) for circulating water through said condenser means and a steam reheater (90) and means (68) to recycle the water through said generator (1), characterised in that the said volumetric engine cylinder (5) is connected to at least a turbocompressor (40) with at least two stages (40₁, 40₂) and one fraction of the expanded medium pressure steam in the said engine (5) is passed to the driving turbines (40₁ₐ, 40_{1b}) of the said turbocompressor, in which the said last expansion of the steam takes place and in which the other fraction of the expanded medium pressure steam in the said engine (5) is recompressed by the said turbocompressor (40) which is connected to an auxiliary volumetric engine (65) to there admit the recompressed steam, which auxiliary engine (65) drives the feed pump (68) of the steam generator (1) and at least a condensation extraction pump (66, 67) coming from the said condenser means (43, 89).

2. Engine according to claim 1 characterised in that the crank shaft (65b) of the said auxiliary engine (65) is connected to the crank shaft (5a) of the said main volumetric engine (5) to improve the output of the engine in applying there the unused excess energy of the auxiliary engine (65).

3. Engine according to either of claims 1 and 2 in atmospheric functioning, characterised in that it comprises, furthermore, an atmospheric pressure air fan (117) whose delivery orifice (117b) is connected by a pipe (118) to the burner of the steam generator (1) to admit the comburant air into the said generator.

4. Engine according to claim 1 in anaerobic functioning, whose steam generator (1) comprises a hydrocarbon burner (1c) coming from a battery of bottles (75) mixed with comburant oxygen produced from a battery of bottles of compressed oxygen (78), whose CO₂ resulting from the steam generator (1) is cooled in a cooler (8) connected to the combustion gas discharge pipe of the said generator (1), is then compressed and liquefied to be stored in the said bottles (98) in place of the comburant oxygen as soon as it is consumed, characterised in that the main volumetric engine cylinder (5) in which the steam coming from the said generator (1) is admitted, is connected to two turbocompressors (39, 40) with at least two stages (39₁, 39₂ - 40₁, 40₂) and a fraction of the expanded steam at medium pressure in the said main engine (5) is passed to the driving turbines (39₁ₐ, 39₂ₐ - 40₁ₐ, 40₂ₐ) of the said turbocompressors where the last expansion of the steam takes place and in that one of the said turbocompressors (39) is connected to the said cooler (8) to draw in and compress the CO₂ resulting from this with a view to its liquefaction.

5. Engine according to claim 4 characterised in that it comprises, for the circuit delivery of CO₂, stages (39₁, 39₂) of a turbo compressor (39), refrigerating means (51, 54) mounted in series whose last refrigerator (54) is connected to a volumetric compressor (56) to perfect the CO₂ compression with a view to it liquefaction, which volumetric compressor (56) is connected to a refrigerant liquifier flask (84), where the final phase of the liquefaction of the CO₂ takes place, which flask (84) is itself connected to the said battery of bottles (78) to transfer there the liquefied CO₂ and in that the shaft of the engagement movement of the said volumetric compressor (56) is connected to the shaft of the engagement movement (65b) of the auxiliary engine (65).

6. Engine according to claim 5 equipping a submarine vehicle characterised in that the CO₂ refrigerant vat (84) and the batteries of bottles of the carburant (75) and of oxygen comburant (78) are placed on the outside of the hull (74) of the said vehicle.

7. Engine according to one of any of claims 1 to 6 characterised in that the second stage (39₂, 40₂) of the steam driving circuit of the said turbocompressors (39, 40) is connected to a condenser (43) which receives the expanded steam at low pressure downstream of the last expansion, which condenser (43) is connected to the said extraction pump (66).

8. Engine according to any one of claims 1 to 7 characterised in that the exhaust pipe (63, 124) for the steam recompressed by the steam turbocompressor (39, 40) is connected on the one hand by a pipe (63, 125) to the intake of the said auxiliary volumetric engine (65), and on the other hand, by means of other pipes (95, 96) to the inlet of two ejectors (91, 93) where the said steam is there applied as motive fluid, of which one ejector (91) is joined to a secondary condenser (89) and is connected by a pipe (61) to the cold area of the principal condenser (43) to keep it under vacuum and whose other ejector (93) is joined to a reheater (90) and is connected by a pipe (92) to the said secondary condenser (89) to keep it under vacuum.

9. Method for obtaining mechanical energy at utilisable delivery speed, either directly on a shaft line or on a receiving engine, without reducing speed and employing a thermal engine with external combustion of a hydrocarbon, utilising the exhaust steam in a closed steam circuit operating according to the RANKINE HIRN cycle involving superheating and drawing off the steam at high pressure, and comprising a steam generator (1) connected to a volumetric engine cylinder (5), whose medium pressure steam output is applied to means where the last expansion of the steam takes place, means (43, 89) for condensing the expanded steam, means (66, 67) for extracting the condensation of the said condenser means, a water reservoir (14, 20), means (45, 46) for putting this water into circulation in the said condenser means and in a steam reheater (90) and means (68) to recycle it in the said generator (1), characterised in that it is sent a fraction of the expanded medium pressure steam coming from the said volumetric engine (5) to drive at least a turbocompressor (40) with at least two stages (40₁, 40₂), where the last expansion of the steam takes place and in that in the said turbocompressor (40) the other fraction of the expanded steam at medium pressure is recompressed and that this recompressed steam is applied to an auxiliary volumetric engine (65) which drives the feed pump (68) of the steam generator (1) and at least a condensation extraction pump (66, 67) coming from the said condenser means (43, 89).

10. Method according to claim 9 characterised in that the crank shaft (60b) of the said auxiliary engine (65) is connected to the crank shaft of the said main volumetric engine.
